# EUROPEAN PATENT APPLICATION

(11) **EP 4 768 621 A1**
(43) Date of publication of application: **01.07.2026**
(21) Application number: 24881151.5
(22) Date of filing: 02.08.2024
(51) Int. Cl.: C22C 38/38, C22C 38/34, C22C 38/24, C21D 8/06

(54) **WIRE ROD FOR FATIGUE-RESISTANT SPRING STEEL WIRE AND PRODUCTION METHOD FOR WIRE ROD, AND PRODUCTION METHOD FOR STEEL WIRE**

(30) Priority: 27.10.2023 CN 202311404088
(71) Applicant: Zhangjiagang Rongsheng Special Steel Co. Ltd., Suzhou, Jiangsu 215625 (CN); Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN)
(72) Inventor: ZHANG, Yu, Suzhou, Jiangsu 215625 (CN); ZHOU, Yun, Suzhou, Jiangsu 215625 (CN)
(74) Representative: Gille Hrabal Partnerschaftsgesellschaft mbB Patentanwälte
(86) International application number: PCT/CN2024/109475
(87) International publication number: WO 2025/086780

(57) **Abstract**

The present application discloses a wire rod for fatigue-resistant spring steel wire and a production method thereof, and a production method for fatigue-resistant spring steel wire. The wire rod has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and impurities.

## Description

The present application is based on and claims priority to Chinese Patent Application Number CN202311404088.9 filed on October 27, 2023, the entire contents of which are incorporated herein by reference.

### TECHNICAL FIELD

The present application belongs to the field of metallurgical technology and relates to a wire rod for fatigue-resistant spring steel wire, a production method for the wire rod for fatigue-resistant spring steel wire, and a production method for fatigue-resistant spring steel wire.

### BACKGROUND

With the advancement of technology and the rapid development of the transportation industry, the automotive industry has been continuously developing toward light-weighting. As safety-bearing components, springs often bear high-cycle alternating loads during service. Under the trend of overall automotive light-weighting, the strength of springs has also been continuously improving.

However, after the strength of springs was improved, the sensitivity of springs to surface defects also increased correspondingly. During the use of automobiles, collisions with foreign objects and long-term corrosive environments may form defects and pits on the spring surface. The higher the strength of the spring, the higher the crack propagation rate at defects and pits, making brittle fracture more likely to occur, thereby aggravating spring damage, shortening service life, and even causing safety accidents.

### SUMMARY

The purpose of the present application is to provide a wire rod for fatigue-resistant spring steel wire, a production method for the wire rod for fatigue-resistant spring steel wire, and a production method for fatigue-resistant spring steel wire.

To achieve one of the above application purposes, one embodiment of the present application provides a production method for a wire rod for fatigue-resistant spring steel wire, the production method comprises molten steel smelting, continuous casting, cogging, grinding, wire rod rolling, and controlled cooling processes performed in sequence; wherein,
the molten steel obtained from the molten steel smelting process has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities;
the continuous casting process adopts tundish induction heating, controlling a superheat temperature of the tundish during the entire casting process to 15±5°C;
in the cogging process, the large square billet obtained from the continuous casting process is sent into a heating furnace for heating and then continuously rolled and cogged into a small square billet, wherein a heating temperature of the large square billet is ≤1100°C, and a soaking time is 220-250min;
in the wire rod rolling process, the small square billet after grinding is sent into a heating furnace for heating and then rolled into the wire rod, wherein a heating temperature of the small square billet is ≤1050°C, a soaking time is 80-110min, a rolling start temperature is 950-1000°C, and a finishing rolling temperature is 910-940°C;
in the controlled cooling process, an air cooling line is used to cool the wire rod, a laying head temperature is 900-930°C, a cooling rate of the wire rod before cooling to 620°C is 7-15°C/s, and a cooling rate after the temperature of the wire rod drops to 620°C is ≤2°C/s.

As a further improvement of one embodiment, the molten steel obtained from the molten steel smelting process has a chemical composition in percentage by mass comprising: C 0.2-0.3%, Si 2.5-3.0%, Mn 2.5-3.0%, Cr 2.0-3.0%, V 0.5-1.0%, P≤0.01%, S≤0.01%, 7%≤Si+Mn+Cr≤8%, with the balance being Fe and inevitable impurities.

As a further improvement of one embodiment, in the controlled cooling process, thermal retention covers of the first to third roller tables of the air cooling line are controlled to open, thermal retention covers of the remaining roller tables are closed, fans No. 1-3 of the air cooling line are controlled to open, the remaining fans are closed, and air volume of fans No. 1-2 is controlled to 100%, air volume of fan No. 3 is controlled to 75%, a roller table speed of the first to third roller tables is 0.4m/s, and a roller table speed of the remaining roller tables is 0.20-0.22m/s.

As a further improvement of one embodiment, the molten steel smelting process comprises hot metal pre-desulfurization, converter smelting, Ladle Furnace refining, and RH vacuum treatment steps performed in sequence;
in the hot metal pre-desulfurization step, hot metal from blast furnace is desulfurized in a KR desulfurization unit until S in the hot metal is ≤0.0015%, a temperature of the hot metal after desulfurization is ≥1350°C, and then desulfurization slag is removed; in the hot metal from blast furnace, Si content is 0.25-0.65%, S content is ≤0.04%, and Ti content is ≤0.06%.

As a further improvement of one embodiment, in the converter smelting step, smelting raw material composed of scrap steel and the desulfurized hot metal is sent into a converter for smelting, wherein in the smelting raw material, a mass proportion of the desulfurized hot metal is ≥85%; during tapping, sliding gate is adopted to retent slag, an amount of slag carryover is controlled to ≤150kg, a hot heel weight is 1-3t, when 30%-50% of tapping is completed, low carbon ferrochrome, ferrosilicon alloy, and metallic manganese are added in sequence for alloying, then 2.0-4.0kg/t of lime is added for slag making, and after tapping is completed, 1.5-2.5kg/t of silicon carbide is added to the slag surface to deoxidize the slag.

As a further improvement of one embodiment, in the scrap steel, S content is ≤0.02%, P content is ≤0.02%, and Sn content is ≤0.03%;
in the ferrosilicon alloy, Al content is ≤0.010% and Ti content is ≤0.008%.

As a further improvement of one embodiment, in the Ladle Furnace refining step, after arrival at the refining station, a slag layer thickness is controlled to 50-80mm, during the refining process, refining slag is added to the molten steel for slag conditioning and electric heating is performed, and tapping is conducted after the temperature of the molten steel, the chemical composition of the molten steel, and the chemical composition of the slag all reach target ranges;
wherein a binary basicity of the refining slag is 1.5-2.0, and FeO content in the refining slag is ≤1.0%.

As a further improvement of one embodiment, in the RH vacuum treatment step, after the molten steel arrives at the station, vacuum pumping is performed, circulation degassing treatment is conducted when a vacuum degree reaches below 2mbar, a degassing time is ≥15min, and then vacuum breaking is performed followed by standing for 10-20min.

As a further improvement of one embodiment, in the grinding process, a grinding wheel is used to perform full grinding on the small square billet, and a grinding allowance is ≥1mm.

To achieve one of the above purposes, one embodiment of the present application further provides a wire rod for fatigue-resistant spring steel wire, wherein the wire rod has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities.

To achieve one of the above purposes, one embodiment of the present application further provides a production method for fatigue-resistant spring steel wire, the production method comprises molten steel smelting, continuous casting, cogging, grinding, wire rod rolling, controlled cooling, acid pickling, drawing, and heat treatment processes performed in sequence; wherein,
the molten steel obtained from the molten steel smelting process has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities;
the continuous casting process adopts tundish induction heating, controlling a superheat temperature of the tundish during the entire casting process to 15±5°C;
in the cogging process, the large square billet obtained from the continuous casting process is sent into a heating furnace for heating and then continuously rolled and cogged into a small square billet, wherein a heating temperature of the large square billet is ≤1100°C, and a soaking time is 220-250min;
in the wire rod rolling process, the small square billet after grinding is sent into a heating furnace for heating and then rolled into the wire rod, wherein a heating temperature of the small square billet is ≤1050°C, a soaking time is 80-110min, a rolling start temperature is 950-1000°C, and a finishing rolling temperature is 910-940°C;
in the controlled cooling process, an air cooling line is used to cool the wire rod, a laying head temperature is 900-930°C, a cooling rate of the wire rod before cooling to 620°C is 7-15°C/s, and a cooling rate after the temperature of the wire rod drops to 620°C is ≤2°C/s;
in the heat treatment process, online induction heat treatment is performed on the spring steel wire obtained from the drawing process on a production line equipped with online induction heating, wherein a quenching temperature is 890-920°C, a tempering temperature is 420-450°C, and a line speed is 28-35m/min.

As a further improvement of one embodiment, the fatigue-resistant spring steel wire has a tensile strength ≥1900MPa and an area reduction ≥55%, and a spring prepared from the fatigue-resistant spring steel wire has a fatigue life ≥500,000 cycles when a depth of surface defects reaches 1%×D, wherein D is a diameter of the fatigue-resistant spring steel wire.

Compared with the existing technology, the beneficial effects of the present application include:
(1) In the chemical composition design scheme, by controlling the C content at a relatively low level, combined with controlling the Si, Mn, and Cr contents, while ensuring that the finally prepared spring steel wire has excellent strength and toughness, the elastic performance and corrosion resistance are improved; wherein, Mn can improve the hardness and strength of ferrite and austenite in steel, and improve the stability of austenite, significantly improving the hardenability of steel; Cr and C can form stable compounds, thereby preventing segregation of C or impurities, reducing decarburization depth and improving the anti-oxidation effect of steel, significantly increasing the hardenability and tempering resistance of steel; in addition, V can refine microstructure grains and improve strength and toughness, and V can combine with C and N to form fine carbides and nitrides, which can improve fatigue resistance, but excessive V tends to generate coarse VC particles, which adversely affects fatigue resistance.
(2) The fatigue-resistant spring steel wire prepared by further drawing the wire rod of the present application has a tensile strength ≥1900MPa and an area reduction ≥55%, and a spring prepared from the fatigue-resistant spring steel wire has a fatigue life ≥500,000 cycles when a depth of surface defects reaches 1%×D, wherein D is a diameter of the fatigue-resistant spring steel wire. That is to say, when the spring prepared from the fatigue-resistant spring steel wire of the present application is applied to automobiles and other products, even when defects and pits are formed on the spring surface due to collisions with foreign objects or long-term corrosive environments, when the depth of defects and pits reaches 1%×D, the number of stress cycles that the spring can bear before fatigue failure can still reach 500,000 cycles or more.

The term "comprise" used herein and variations of the term, such as "comprises", "comprised", "comprising", "including", "containing", do not exclude other features, components, elements or steps unless the context clearly requires otherwise.

### DETAILED DESCRIPTION

The technical scheme of the present application is further described below in combination with specific embodiments, but the scope of protection is not limited to the description made.

One embodiment of the present application provides a production method for a wire rod for fatigue-resistant spring steel wire, and a wire rod for fatigue-resistant spring steel wire prepared by the production method.

Specifically, the wire rod for fatigue-resistant spring steel wire has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities.

One embodiment of the present application further provides a fatigue-resistant spring steel wire, which is prepared from the above wire rod for fatigue-resistant spring steel wire as a base material and has the same chemical composition as the wire rod for fatigue-resistant spring steel wire.

In the chemical composition design scheme of the present application, by controlling the C content at a relatively low level, combined with controlling contents of Si, Mn, and Cr, while ensuring that the finally prepared spring steel wire has excellent strength and toughness, the elastic performance and corrosion resistance are improved; wherein, Mn can improve the hardness and strength of ferrite and austenite in steel, and improve the stability of austenite, significantly improving the hardenability of steel; Cr and C can form stable compounds, thereby preventing segregation of C or impurities, reducing decarburization depth and improving the anti-oxidation effect of steel, significantly increasing the hardenability and tempering resistance of steel; in addition, V can refine microstructure grains and improve strength and toughness, and V can combine with C and N to form fine carbides and nitrides, which can improve fatigue resistance, but excessive V tends to generate coarse VC particles, which adversely affects fatigue resistance.

Each process in the production method for the wire rod for fatigue-resistant spring steel wire is specifically described below.

### (1) Molten Steel Smelting Process

The chemical composition of the molten steel finally obtained from the molten steel smelting process is the same as the chemical composition of the wire rod for fatigue-resistant spring steel wire. That is, the molten steel finally obtained from the molten steel smelting process has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities.

The chemical composition of the molten steel finally obtained from the molten steel smelting process determines the chemical composition of the finally obtained wire rod for fatigue-resistant spring steel wire and the fatigue-resistant spring steel wire prepared by further drawing. That is, the chemical composition of the molten steel at the end point of the molten steel smelting process is consistent with the chemical composition of the finally obtained wire rod for fatigue-resistant spring steel wire and the fatigue-resistant spring steel wire.

Specifically, the molten steel smelting process comprises the following steps performed in sequence:

### a. Hot Metal Pre-desulfurization Step

Hot metal from blast furnace is desulfurized in a KR desulfurization unit until S in the hot metal is ≤0.0015%, a temperature of the hot metal after desulfurization is ≥1350°C, and then desulfurization slag is removed.

Preferably, in the hot metal from blast furnace, Si content is 0.25-0.65%, S content is ≤0.04%, and Ti content is ≤0.06%.

### b. Converter Smelting Step

Smelting raw material composed of scrap steel and the desulfurized hot metal is sent into a converter for smelting. In the smelting raw material, a mass proportion of the desulfurized hot metal is ≥85%; during converter tapping, sliding gate is adopted to retent slag, an amount of slag carryover is controlled to ≤150kg, a hot heel weight is 1-3t, when 30%-50% of tapping is completed, low carbon ferrochrome, ferrosilicon alloy, and metallic manganese are added to the ladle in sequence for alloying, then 2.0-4.0kg/t of lime is added for slag making, and after tapping is completed, 1.5-2.5kg/t of silicon carbide is added to the slag surface to deoxidize the slag.

Preferably, in the scrap steel, S content is ≤0.02%, P content is ≤0.02%, and Sn content is ≤0.03%.

Preferably, in the ferrosilicon alloy, Al content is ≤0.010% and Ti content is ≤0.008%.

### c. Ladle Furnace Refining Step

The molten steel after converter smelting is sent to a Ladle Furnace for refining. After arrival at the refining station, a slag layer thickness is controlled to 50-80mm, during the refining process, refining slag is added to the molten steel for slag conditioning and electric heating is performed, then alloys are added for chemical composition adjustment and inclusion control, during which temperature measurement, sampling and testing, diffusion deoxidation and heating are continuously performed, and tapping is conducted after the temperature of the molten steel, the chemical composition of the molten steel, and the chemical composition of the slag all reach target ranges.

Wherein a binary basicity of the refining slag is 1.5-2.0, and FeO content in the refining slag is ≤1.0%.

### d. RH Vacuum Treatment Step

The molten steel after Ladle Furnace refining is sent to an RH vacuum furnace for vacuum refining to further remove inclusions in the molten steel. Specifically, after the molten steel arrives at the station, vacuum pumping is performed, circulation degassing treatment is conducted when a vacuum degree reaches below 2mbar, a degassing time is ≥15min, and then vacuum breaking is performed followed by standing for 10-20min.

### (2) Continuous Casting Process

A continuous casting machine is used to cast the molten steel from the RH refining process into a large square billet.

The chemical composition of the large square billet is consistent with the molten steel finally obtained from the molten steel smelting process and the chemical composition of the wire rod for fatigue-resistant spring steel wire. That is, the obtained large square billet has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities.

Specifically, tundish induction heating is adopted throughout the entire casting sequence, controlling a superheat temperature of the tundish during the entire casting process to 15±5°C.

### (3) Cogging Process

The large square billet obtained from the continuous casting process is sent into a heating furnace for heating and then continuously rolled and cogged into a small square billet, wherein a heating temperature of the large square billet in the heating furnace is ≤1100°C, and a soaking time is 220-250min.

### (4) Grinding Process

A grinding wheel is used to perform full grinding on the small square billet, and a grinding allowance is ≥1mm.

Specifically, fluorescence detection is used to inspect the surface quality of the small square billet, and grinding is performed according to the detection results until the surface of the small square billet has no surface defects and decarburized layer, which is beneficial for the implementation of surface quality control in the subsequent rolling process.

### (5) Wire Rod Rolling Process

The small square billet after grinding is sent into a heating furnace for heating and then rolled into a wire rod with a diameter of 6-20mm. A heating temperature of the small square billet in the heating furnace is ≤1050°C, a soaking time is 80-110min, a rolling start temperature is 950-1000°C, and a finishing rolling temperature is 910-940°C.

Thus, through controlling various temperatures in the rolling process, microstructure control of the wire rod can be achieved, thereby laying a foundation for the comprehensive performance of the fatigue-resistant spring steel wire products prepared by further processing.

### (6) Controlled Cooling Process

An air cooling line is used to cool the wire rod, a laying head temperature is 900-930°C, a cooling rate of the wire rod before cooling to 620°C is 7-15°C/s, and a cooling rate after the temperature of the wire rod drops to 620°C is ≤2°C/s.

Through controlling the cooling temperature and cooling rate, microstructure control of the wire rod can be achieved, thereby laying a foundation for the comprehensive performance of the fatigue-resistant spring steel wire products prepared by further processing.

Specifically, in the present embodiment, the controlled cooling process is performed on a Stelmor air cooling line.

Specifically, in the controlled cooling process, thermal retention covers of the first to third roller tables of the air cooling line are controlled to open, thermal retention covers of the remaining roller tables are closed, fans No. 1-3 of the air cooling line are controlled to open, the remaining fans are closed, and air volume of fans No. 1-2 is controlled to 100%, air volume of fan No. 3 is controlled to 75%, a roller table speed of the first to third roller tables is controlled to 0.4m/s, and a roller table speed of the remaining roller tables is 0.20-0.22m/s.

In summary, based on the chemical composition design of the present application, combined with the control of the aforementioned production process, the finally prepared wire rod has high strength, high toughness and excellent fatigue resistance, laying a foundation for further preparing fatigue-resistant spring steel wire with high toughness.

Further, the above wire rod for fatigue-resistant spring steel wire can be further processed through the following processes to prepare fatigue-resistant spring steel wire.

### (7) Acid Pickling Process

The wire rod is pickled with 20% hydrochloric acid aqueous solution at 20-30°C for 15-25min, then washed with clean water and put into phosphating solution for phosphating treatment, then washed with water, and subjected to saponification treatment with soapy water followed by natural air drying.

### (8) Drawing Process

The wire rod after acid pickling is drawn using dies into spring steel wire with a diameter of 5-18mm.

### (9) Heat Treatment Process

Online induction heat treatment is performed on the spring steel wire obtained from the drawing process on a production line equipped with online induction heating, wherein a quenching temperature is 890-920°C, a tempering temperature is 420-450°C, and a line speed is 28-35m/min.

Based on the aforementioned wire rod, through the heat treatment process, fine grains can be formed in the spring steel wire, thereby having both high strength, high toughness and excellent fatigue resistance.

After testing, the finally prepared finished fatigue-resistant spring steel wire has a tensile strength ≥1900MPa and an area reduction ≥55%, and a spring prepared from the fatigue-resistant spring steel wire has a fatigue life ≥500,000 cycles when a depth of surface defects reaches 1%×D, wherein D is a diameter of the fatigue-resistant spring steel wire. That is to say, when the spring prepared from the fatigue-resistant spring steel wire of the present application is applied to automobiles and other products, even when defects and pits are formed on the spring surface due to collisions with foreign objects or long-term corrosive environments, when the depth of defects and pits reaches 1%×D, the number of stress cycles that the spring can bear before fatigue failure can still reach 500,000 cycles or more.

The specific implementation of the present application is further described through the following 12 examples. Of course, these 12 examples are only a part of the numerous variations contained in the present embodiment, not all. Other embodiments made based on the aforementioned embodiments do not depart from the technical purpose of the present application.

Firstly, Examples 1-12 all provide a wire rod for fatigue-resistant spring steel wire and a fatigue-resistant spring steel wire prepared from the wire rod through further acid pickling, drawing, and heat treatment processes. The chemical compositions of the wire rod and spring steel wire are shown in Table 1, with the balance being Fe and inevitable impurities.

**Table 1**

| Example | Chemical composition in percentage by mass(wt,%) | | | | | | |
|---|---|---|---|---|---|---|---|
| | C | Si | Mn | Cr | V | P | S |
| 1 | 0.23 | 2.3 | 2 | 2.7 | 0.53 | 0.008 | 0.007 |
| 2 | 0.24 | 2.5 | 2.1 | 2.5 | 0.6 | 0.008 | 0.008 |
| 3 | 0.24 | 2.6 | 2.6 | 2.3 | 0.65 | 0.007 | 0.006 |
| 4 | 0.26 | 2.5 | 2.3 | 2.6 | 0.7 | 0.008 | 0.006 |
| 5 | 0.29 | 2.4 | 2.8 | 2.5 | 0.9 | 0.005 | 0.007 |
| 6 | 0.24 | 2.3 | 2.4 | 2.3 | 0.4 | 0.006 | 0.006 |
| 7 | 0.29 | 2.8 | 2.6 | 2.1 | 0.51 | 0.005 | 0.005 |
| 8 | 0.27 | 2.6 | 2.4 | 2.3 | 0.57 | 0.007 | 0.006 |
| 9 | 0.24 | 2.4 | 2.4 | 2.3 | 0.58 | 0.004 | 0.005 |
| 10 | 0.25 | 2.5 | 2.6 | 2.6 | 0.56 | 0.008 | 0.006 |
| 11 | 0.23 | 2.7 | 2.5 | 2.5 | 0.67 | 0.008 | 0.008 |
| 12 | 0.24 | 2.6 | 2.3 | 2.4 | 0.87 | 0.006 | 0.007 |

For the production methods of wire rods in each example, a process route comprising hot metal pre-desulfurization, converter smelting, Ladle Furnace refining, RH vacuum treatment, continuous casting, cogging, grinding, wire rod rolling, and controlled cooling performed in sequence is adopted, and the spring steel wire in each example is prepared from the wire rod in each example through further acid pickling, drawing, and heat treatment processes. For specific operations of each process, please refer to the description above and will not be repeated here.

For the spring steel wires of Examples 1-12, sampling and mechanical property testing are performed according to the same test method, and the spring steel wires of Examples 1-12 are further prepared into springs for fatigue resistance testing. The specific test methods and test results are as follows:
(1) In terms of mechanical properties, referring to GBT228.1-2021 Metallic materials - Tensile testing-Part 1: Method of test at room temperature, a tensile testing machine is used to conduct mechanical property testing on the spring steel wires of Examples 1-12. The tensile strength and area reduction of the spring steel wires of Examples 1-12 are shown in Table 2.
(2) In terms of fatigue resistance, referring to GB-T16947-2009 Helical spring fatigue testing standard, the springs prepared from the spring steel wires of any one of Examples 1-12 are divided into two groups for fatigue testing. One group of springs has no defects on the surface, and the other group of springs has defects on the surface with a defect depth reaching 1%×D, where D is the diameter of the spring steel wire used by the spring. The diameter D of the spring steel wire is detailed in Table 2. The fatigue lives of the two groups of springs are shown in Table 2.

**Table 2**

| Example | D /mm | Mechanical properties | | Fatigue resistance properties | |
|---|---|---|---|---|---|
| | | Tensile strength /MPa | Area reduction /% | Fatigue lives of springs with no defects on the surface | Fatigue lives of springs with defects on the surface with a defect depth reaching 1%×D |
| 1 | 13.8 | 1932 | 58 | ≥500,000 cycles | ≥500,000 cycles |
| 2 | 13.8 | 1935 | 57 | ≥500,000 cycles | ≥500,000 cycles |
| 3 | 13.8 | 1954 | 57 | ≥500,000 cycles | ≥500,000 cycles |
| 4 | 13.8 | 1963 | 56 | ≥500,000 cycles | ≥500,000 cycles |
| 5 | 13.8 | 1980 | 55 | ≥500,000 cycles | ≥500,000 cycles |
| 6 | 13.8 | 1942 | 58 | ≥500,000 cycles | ≥500,000 cycles |
| 7 | 14.2 | 1938 | 57 | ≥500,000 cycles | ≥500,000 cycles |
| 8 | 14.2 | 1964 | 57 | ≥500,000 cycles | ≥500,000 cycles |
| 9 | 14.2 | 1968 | 56 | ≥500,000 cycles | ≥500,000 cycles |
| 10 | 14.2 | 1985 | 55 | ≥500,000 cycles | ≥500,000 cycles |
| 11 | 14.2 | 1981 | 59 | ≥500,000 cycles | ≥500,000 cycles |
| 12 | 14.2 | 1987 | 55 | ≥500,000 cycles | ≥500,000 cycles |

From Table 2, it can be seen that the wire rods in Examples 1-12 produced according to the present embodiment, and the spring steel wires prepared by further drawing have excellent comprehensive performance, with a tensile strength ≥1900MPa and an area reduction ≥55%. Springs prepared from the fatigue-resistant spring steel wire have a fatigue life ≥500,000 cycles when a depth of surface defects reaches 1%×D.

It should be understood that although the present specification is described according to embodiments, not every embodiment contains only one independent technical solution. This narrative mode of the specification is merely for clarity. Those skilled in the art should regard the specification as a whole, and the technical solutions in various embodiments may also be appropriately combined to form other embodiments understandable to those skilled in the art.

## Claims

1. A production method for wire rod, **characterized in that** the production method comprises molten steel smelting, continuous casting, cogging, grinding, wire rod rolling, and controlled cooling processes performed in sequence; wherein,
the molten steel obtained from the molten steel smelting process has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities;
the continuous casting process adopts tundish induction heating, controlling a superheat temperature of the tundish during the entire casting process to 15±5°C;
in the cogging process, the large square billet obtained from the continuous casting process is sent into a heating furnace for heating and then continuously rolled and cogged into a small square billet, wherein a heating temperature of the large square billet is ≤1100°C, and a soaking time is 220-250min;
in the wire rod rolling process, the small square billet after grinding is sent into a heating furnace for heating and then rolled into the wire rod, wherein a heating temperature of the small square billet is ≤1050°C, a soaking time is 80-110min, a rolling start temperature is 950-1000°C, and a finishing rolling temperature is 910-940°C;
in the controlled cooling process, an air cooling line is used to cool the wire rod, a laying head temperature is 900-930°C, a cooling rate of the wire rod before cooling to 620°C is 7-15°C/s, and a cooling rate after the temperature of the wire rod drops to 620°C is ≤2°C/s.

2. The production method for wire rod according to claim 1, **characterized in that** in the controlled cooling process, thermal retention covers of the first to third roller tables of the air cooling line are controlled to open, thermal retention covers of the remaining roller tables are closed, fans No. 1-3 of the air cooling line are controlled to open, the remaining fans are closed, and air volume of fans No. 1-2 is controlled to 100%, air volume of fan No. 3 is controlled to 75%, a roller table speed of the first to third roller tables is 0.4m/s, and a roller table speed of the remaining roller tables is 0.20-0.22m/s.

3. The production method for wire rod according to claim 1, **characterized in that** the molten steel smelting process comprises hot metal pre-desulfurization, converter smelting, Ladle Furnace refining, and RH vacuum treatment steps performed in sequence;
in the hot metal pre-desulfurization step, hot metal from blast furnace is desulfurized in a KR desulfurization unit until S in the hot metal is ≤0.0015%, a temperature of the hot metal after desulfurization is ≥1350°C, and then desulfurization slag is removed; in the hot metal from blast furnace, Si content is 0.25-0.65%, S content is ≤0.04%, and Ti content is ≤0.06%.

4. The production method for wire rod according to claim 3, **characterized in that** in the converter smelting step, smelting raw material composed of scrap steel and the desulfurized hot metal is sent into a converter for smelting, wherein in the smelting raw material, a mass proportion of the desulfurized hot metal is ≥85%; during tapping, sliding gate is adopted to retent slag, an amount of slag carryover is controlled to ≤150kg, a hot heel weight is 1-3t, when 30%-50% of tapping is completed, low carbon ferrochrome, ferrosilicon alloy, and metallic manganese are added in sequence for alloying, then 2.0-4.0kg/t of lime is added for slag making, and after tapping is completed, 1.5-2.5kg/t of silicon carbide is added to the slag surface to deoxidize the slag.

5. The production method for wire rod according to claim 4, **characterized in that** in the scrap steel, S content is ≤0.02%, P content is ≤0.02%, and Sn content is ≤0.03%;
in the ferrosilicon alloy, Al content is ≤0.010% and Ti content is ≤0.008%.

6. The production method for wire rod according to claim 3, **characterized in that** in the Ladle Furnace refining step, after arrival at the refining station, a slag layer thickness is controlled to 50-80mm, during the refining process, refining slag is added to the molten steel for slag conditioning and electric heating is performed, and tapping is conducted after the temperature of the molten steel, the chemical composition of the molten steel, and the chemical composition of the slag all reach target ranges;
wherein a binary basicity of the refining slag is 1.5-2.0, and FeO content in the refining slag is ≤1.0%.

7. The production method for wire rod according to claim 3, **characterized in that** in the RH vacuum treatment step, after the molten steel arrives at the station, vacuum pumping is performed, circulation degassing treatment is conducted when a vacuum degree reaches below 2mbar, a degassing time is ≥15min, and then vacuum breaking is performed followed by standing for 10-20min.

8. The production method for wire rod according to claim 1, **characterized in that** in the grinding process, a grinding wheel is used to perform full grinding on the small square billet, and a grinding allowance is ≥1mm.

9. A wire rod, **characterized in that** the wire rod has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities.

10. A production method for steel wire, **characterized in that** the production method comprises molten steel smelting, continuous casting, cogging, grinding, wire rod rolling, controlled cooling, acid pickling, drawing, and heat treatment processes performed in sequence; wherein,
the molten steel obtained from the molten steel smelting process has a chemical composition in percentage by mass comprising: C 0.2-0.3%, Si 2.0-3.0%, Mn 1.8-3.0%, Cr 2.0-3.0%, V 0.5-1.0%, P≤0.01%, S≤0.01%, 7%≤Si+Mn+Cr≤8%, with the balance being Fe and inevitable impurities;
the continuous casting process adopts tundish induction heating, controlling a superheat temperature of the tundish during the entire casting process to 15±5°C;
in the cogging process, the large square billet obtained from the continuous casting process is sent into a heating furnace for heating and then continuously rolled and cogged into a small square billet, wherein a heating temperature of the large square billet is ≤1100°C, and a soaking time is 220-250min;
in the wire rod rolling process, the small square billet after grinding is sent into a heating furnace for heating and then rolled into the wire rod, wherein a heating temperature of the small square billet is ≤1050°C, a soaking time is 80-110min, a rolling start temperature is 950-1000°C, and a finishing rolling temperature is 910-940°C;
in the controlled cooling process, an air cooling line is used to cool the wire rod, a laying head temperature is 900-930°C, a cooling rate of the wire rod before cooling to 620°C is 7-15°C/s, and a cooling rate after the temperature of the wire rod drops to 620°C is ≤2°C/s;
in the heat treatment process, online induction heat treatment is performed on the spring steel wire obtained from the drawing process on a production line equipped with online induction heating, wherein a quenching temperature is 890-920°C, a tempering temperature is 420-450°C, and a line speed is 28-35m/min.
